# EUROPÄISCHE PATENTANMELDUNG

(11) **EP 1 808 342 A2**
(43) Veröffentlichungstag der Anmeldung: **18.07.2007**
(21) Anmeldenummer: 06025310.1
(22) Anmeldetag: 07.12.2006
(51) Int. Cl.: B60R 21/06, B60R 5/04

(54) **Schutzvorrichtung für ein Kraftfahrzeug**

(30) Priorität: 02.01.2006 DE 102006001029
(71) Anmelder: BOS GmbH & Co. KG, 73760 Ostfildern (DE)
(72) Erfinder: Ehrenberger, Marina, 73730 Esslingen (DE)
(74) Vertreter: Patentanwälte Ruff, Wilhelm, Beier, Dauster & Partner

(57) **Zusammenfassung**

Eine Schutzvorrichtung für Kraftfahrzeug mit einem flexiblen Flächengebilde, das auf einer Wickelwelle zwischen einer Ruheposition und einer Schutzposition auf- und abwickelbar angeordnet ist, wobei die Wickelwelle durch eine Wickelfederanordnung in Aufwickelrichtung drehmomentbeaufschlagt ist, deren Aufwickelkraft mittels einer Steuereinrichtung reduzierbar ist, wobei die Steuereinrichtung eine Zählspirale und einen in der Zählspirale geführten Steuerfinger umfasst, ist bekannt.

Erfindungsgemäß sind dem Steuerfinger Sicherungsmittel zugeordnet, die den Steuerfinger in Aufwickelrichtung des Flächengebildes in einer inneren Position zurückhalten.

Einsatz für Rückhaltevorrichtungen in einem Fahrzeuginnenraum.

## Beschreibung

Die Erfindung betrifft eine Schutzvorrichtung für ein Kraftfahrzeug mit einem flexiblen Flächengebilde, das auf einer in einem Gehäuse drehbar gelagerten Wickelwelle zwischen einer aufgewickelten Ruheposition und wenigstens einer zumindest teilweise ausgezogenen Schutzposition auf- und abwickelbar angeordnet ist, wobei die Wickelwelle durch eine Wickelfederanordnung in Aufwickelrichtung drehmomentbeaufschlagt ist, deren Aufwickelkraft mittels einer Steuereinrichtung reduzierbar ist, wobei die Steuereinrichtung eine Zählspirale und einen in der Zählspirale geführten, relativ zu einer Wickelachse der Wickelwelle radial beweglichen Steuerfinger umfasst, der wenigstens in Abwickelrichtung durch Federkraft gegen einen spiralförmig verlaufenden Führungssteg der Zählspirale gedrückt ist.

Eine derartige Schutzvorrichtung ist aus der WO 98/24660 A2 bekannt. Die Schutzvorrichtung weist ein flexibles Trennnetz auf, das in einer Ruheposition auf einer Wickelwelle innerhalb eines Kassettengehäuses aufgewickelt ist. In einer Schutzposition ist das Trennnetz aus dem Kassettengehäuse herausgezogen und mit seinem vorderen Endbereich in dachseitigen Halterungen eingehängt, so dass das Trennnetz etwa vertikal zwischen dem Kassettengehäuse und einem Dachhimmel des Fahrzeuginnenraumes aufgespannt ist. Um das Ausziehen des Trennnetzes aus dem Wickelgehäuse und das Einhängen in die dachseitigen Halterungen für eine Bedienperson zu erleichtern, wird die auf das Trennnetz wirkende Rückholkraft einer Wickelfederanordnung innerhalb des Kassettengehäuses ab einem definierten Ausziehweg des Trennnetzes reduziert oder aufgehoben. Dadurch kann eine Bedienperson das Trennnetz zunächst etwa horizontal zum Fahrzeugheck hin ausziehen, bis die Steuereinrichtung zum Ausschalten oder Reduzieren der Rückholkraft der Wickelfeder wirksam wird. Anschließend kann das Trennnetz ohne großen Kraftaufwand in die dachseitigen Halterungen eingehängt werden. Sobald die Wickelfederanordnung wieder wirksam wird, dreht sie die Wickelwelle in Aufwickelrichtung zurück. Die Steuer- oder Schalteinrichtung, die die Wirksamkeit der Wickelfederanordnung aufhebt oder reduziert, ist mit einer Zähleinrichtung versehen, wobei ein radial beweglicher und radial federbelasteter Zählfinger stirnseitig an der Wickelwelle angeordnet ist. Der Zählfinger greift in eine stationär am Kassettengehäuse angeordnete Zählspirale ein und wandert beim Drehen der Wickelwelle in der Zählspirale allmählich nach außen. Beim Aufwickeln der Wickelwelle gelangt der Zählfinger ab einer bestimmten Umdrehung in eine radial innere Spiralwindung, so dass er beim weiteren Aufwickeln bei jeder Umdrehung vom Ende der inneren Windung in die nächstliegende äußere Windung zurückspringt. Hierdurch ergibt sich beim Aufwickeln ein sich wiederholendes Klackgeräusch.

Aufgabe der Erfindung ist es, eine Schutzvorrichtung der eingangs genannten Art zu schaffen, bei der eine Geräuschbildung beim Aufwickeln des Flächengebildes vermieden wird.

Diese Aufgabe wird dadurch gelöst, dass dem Steuerfinger Sicherungsmittel zugeordnet sind, die den Steuerfinger in Aufwickelrichtung des Flächengebildes in einer inneren Position zurückhalten. Dadurch wird erfindungsgemäß vermieden, dass der als Zählfinger dienende Steuerfinger beim Aufwickeln des Flächengebildes ab dem Erreichen der inneren Spiralwindung im inneren Endbereich der inneren Spiralwindung durch seine Federbelastung auf die nächstliegende äußere Spiralwindung zurückschlägt. Der Steuerfinger wird vielmehr in einer stabilen Position gehalten, so dass die auf den Steuerfinger einwirkende Federkraft den Steuerfinger nicht gegen den entsprechenden Führungssteg der Zählspirale drücken kann. Die Sicherungsmittel wirken lediglich in Aufwickelrichtung des Flächengebildes. In Abwickelrichtung sind sie unwirksam bzw. außer Kraft gesetzt. Eine Geräuschbildung in Aufwickelrichtung des Flächengebildes wird durch die erfindungsgemäße Lösung wirksam vermieden. Die erfindungsgemäße Lösung eignet sich insbesondere für Schutzvorrichtungen im Fahrzeuginnenraum eines Kraftfahrzeugs, vorzugsweise für Trennvorrichtungen, die einen Fahrgastraum von einem Laderaum abtrennen. Die erfindungsgemäße Lösung eignet sich auch für Sonnenschutzvorrichtungen, bei denen ein als Sonnenschutz dienendes flexibles Flächengebilde mit einer Steuereinrichtung versehen ist, die eine Zählspirale und einen entsprechenden Steuerfinger aufweist.

In Ausgestaltung der Erfindung ist der Steuerfinger in einer der Wickelwelle zugeordneten Radialführung radial beweglich geführt, und die Sicherungsmittel sind als formschlüssig wirksame, zueinander korrespondierende Hinterschnitte im Bereich der Radialführung einerseits und im Bereich des Steuerfingers andererseits ausgeführt. Dadurch sind die Sicherungsmittel als mechanisch wirksame Rastprofilierungen gestaltet. Die entsprechenden Hinterschnitte sind vorzugsweise einstückig an der Radialführung einerseits und im Bereich einer Außenkontur des Steuerfingers andererseits vorgesehen. Dadurch ergibt sich eine besonders einfache und dennoch funktionssichere Ausgestaltung.

In weiterer Ausgestaltung der Erfindung ist die Radialführung derart gestaltet, dass der Steuerfinger begrenzte Kippbewegungen um eine koaxial oder parallel zur Wickelachse verlaufende Kippachse durchführen kann. Vorzugsweise ist die Kippachse koaxial mit der Wickelachse ausgeführt. Durch die zusätzliche begrenzte Kippbeweglichkeit des Steuerfingers kann dieser in einer Drehrichtung der Wickelwelle vorzugsweise derart kippen, dass die Hinterschnitte des Steuerfingers und die Radialführung einander hintergreifen und in dieser Position den Steuerfinger gegen die Federkraft des Steuerfingers positionssichern. In der anderen Drehrichtung wird der Steuerfinger entgegengerichtet verkippt, so dass die Hinterschnitte voneinander freikommen und die entsprechende Federbelastung den Steuerfinger gegen den Führungssteg der Zählspirale drückt.

In weiterer Ausgestaltung der Erfindung sind die Hinterschnitte der Radialführung und des Steuerfingers auf einer einzelnen, gemeinsamen Seite angeordnet, die derart gewählt ist, dass die Hinterschnitte in Aufwickelrichtung der Wickelwelle einander hintergreifen und in Abwickelrichtung voneinander getrennt sind. Dadurch ist mit einfachen Mitteln sichergestellt, dass der Steuerfinger in einer Drehrichtung positionsgesichert ist und in der anderen Drehrichtung in der Zählspirale entlanglaufen kann.

In weiterer Ausgestaltung der Erfindung ist die Radialführung auf Höhe der Wickelachse eingeschnürt und radial außerhalb zu gegenüberliegenden Seiten trichterartig erweitert. Dadurch wird mit einfachen Mitteln die gewünschte Kippbeweglichkeit des Steuerfingers erreicht.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer, schematisierter Darstellung ausschnittsweise eine Ausführungsform einer erfindungsgemäßen Schutzvorrichtung,
- Fig. 2: in schematischer Schnittdarstellung einen Steuerfinger einer Zähleinrichtung der Schutzvorrichtung nach Fig. 1 in einer Rastposition an einer Wickelwelle,
- Fig. 3: den Steuerfinger an der Wickelwelle in einer Freigabeposition und
- Fig. 4: den Steuerfinger in einer weiteren Bewegungsposition innerhalb einer Zählspirale der Zähleinrichtung.

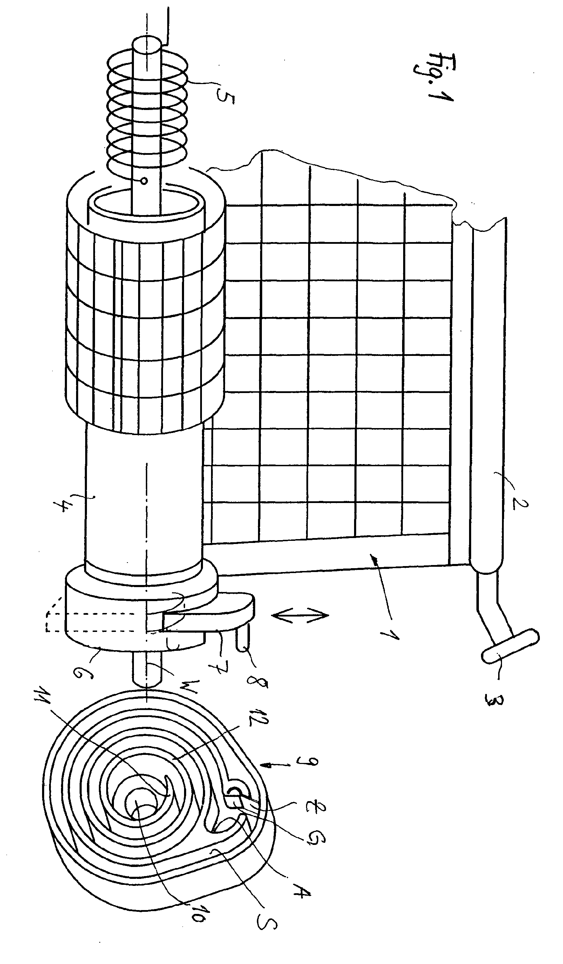

Eine in Fig. 1 dargestellte Schutzvorrichtung stellt eine Rückhaltevorrichtung für Ladegut dar, die in einem Fahrzeuginnenraum eines Personenkraftwagens zwischen Fahrgastraum und Laderaum aufspannbar ist. Die Rückhaltevorrichtung eignet sich für alle Personenkraftwagen, bei denen der Laderaum offen in den Fahrgastraum übergeht, insbesondere bei Kombi-Personenkraftwagen, Vans oder SUV's. Die Rückhaltevorrichtung weist beim dargestellten Ausführungsbeispiel ein flexibles Flächengebilde in Form eines Trennnetzes 1 auf, das auf einer Wickelwelle 4 auf- und abwickelbar gehalten ist. Das Trennnetz 1 ist an seinem in Auszugrichtung vorderen Stirnendbereich 2 mit einer formstabilen Auszugleiste versehen, die an gegenüberliegenden Stirnseiten Halteköpfe 3 aufweist. Die Halteköpfe 3 sind in dachseitige und fahrzeugfest angeordnete Halteaufnahmen einhängbar.

Die Wickelwelle 4 ist um eine Wickelachse W in einem Kassettengehäuse drehbeweglich gelagert, das aus Übersichtlichkeitsgründen nicht dargestellt ist. Das Kassettengehäuse ist in grundsätzlich bekannter Weise unmittelbar hinter einer ein- oder mehrgeteilten Rückenlehnenanordnung einer Fondsitzbank lösbar fahrzeugfest positioniert. Dabei ist das Kassettengehäuse üblicherweise etwa auf Höhe einer Fahrzeugbordkante angeordnet und erstreckt sich in Fahrzeugquerrichtung zwischen gegenüberliegenden Seitenwandteilen des Laderaumes.

Auf die Wickelwelle 4 wirkt in Aufwickelrichtung des Trennnetzes 1 eine Wickelfederanordnung 5, so dass das Trennnetz sich ohne eine Zugbelastung in Abwickelrichtung selbsttätig in seine auf der Wickelwelle 4 aufgerollte Ruheposition aufwickelt. Beim dargestellten Ausführungsbeispiel ist die Wickelfederanordnung 5 als Schraubenfeder ausgeführt und stützt sich mit einem Federende an einem stationären und koaxial innerhalb der Wickelwelle 4 ausgerichteten Achsprofil und mit seinem anderen Federende innenseitig an der Wickelwelle 4 ab.

Die Rückhaltevorrichtung nach Fig. 1 ist mit einer nachfolgend näher beschriebenen Zähleinrichtung 7 bis 9 versehen, die Teil einer Steuereinrichtung zum wegabhängigen Ausschalten der Aufwickelkraft der Wickelfederanordnung 5 zusammenwirkt.

Derartige Steuereinrichtungen sind im übrigen aus der WO 98/24660 A2 und dort insbesondere aus der Ausführungsform nach den Fig. 14 bis 18 oder aus der DE 100 56 671 C1 bekannt. Die der Wickelwelle 4 gemäß Fig. 1 zugeordnete Steuereinrichtung kann alternativ zu der nachfolgend beschriebenen Ausführungsform gemäß einer der in den beiden Druckschriften offenbarten Ausführungsformen ausgeführt sein. Zeit- und/oder wegabhängig wird dort die Aufwickelkraft der Wickelfederanordnung 5 ausgeschaltet oder reduziert.

Vorzugsweise bleibt die Aufwickelkraft der Wickelfederanordnung 5 über einen bestimmten Auszugweg des Trennnetzes 1 aus seiner aufgewickelten Ruheposition heraus zunächst erhalten. Für diesen ersten Auszugweg kann das Trennnetz 1 aus seiner aufgewickelten Ruheposition heraus durch eine entsprechende Bedienperson zunächst etwa horizontal zum Heck hin ausgezogen werden. Dies ist eine für die Bedienperson ergonomisch günstige Zugbewegung, so dass die Bedienperson problemlos die Aufwickelkraft der Wickelfederanordnung 5 überwinden kann. Sobald die Bedienperson das Trennnetz 1 so weit nach hinten ausgezogen auszieht, dass es in dachseitigen Halterungen eingehängt werden kann, muss die Bedienperson vom Heck aus das Trennnetz 1 in dieser ausgezogenen Position nach oben führen und in den dachseitigen Halteaufnahmen einhängen. Falls auch für diesen Vorgang weiterhin die Rückzugskraft der Wickelfederanordnung 5 voll wirksam wäre, müsste die Bedienperson in ergonomisch ungünstiger Lage zum einen durch entsprechenden Kraftaufwand diese Wickelfederkraft ausgleichen und zum anderen gleichzeitig die Einhängung der Halteköpfe 3 in die dachseitigen Halteaufnahmen vornehmen. Bei der vorliegenden Ausführungsform gemäß den Fig. 1 bis 4, die insoweit funktional und aufbaumäßig einer entsprechenden Ausführungsform der oben genannten Druckschriften entspricht, wird zur Vermeidung dieser ungünstigen Belastungen die Steuereinrichtung aktiviert, wodurch die Rückholkraft der Wickelfederanordnung 5 zeitweise ausgeschaltet oder reduziert wird. Wie anhand der oben genannten Druckschriften bereits beschrieben, erfolgt das Ausschalten oder Reduzieren der Rückholkraft der Wickelfederanordnung 5 in einfacher Weise dadurch, dass die Steuereinrichtung eines der beiden Teile, mit denen die unterschiedlichen Enden der Wickelfederanordnung 5 verbunden sind, derart ansteuert, dass sich entweder beide Teile mitdrehen, oder beide Teile stillgesetzt sind. Dadurch ist die Wickelfederanordnung zeitweise ausgeschaltet. Für diesen Vorgang weist die Steuereinrichtung einen Steuerfinger 7 auf, der an einem Stirnendbereich 6 der Wickelwelle 4 angeordnet ist und einen Führungszapfen 8 aufweist, der in entsprechende Spiralwindungen einer Zählspirale 9 eingreift. Die Zählspirale 9 ist Teil der Zähleinrichtung und ist stationär im Kassettengehäuse angeordnet. Die Zählspirale 9 ist koaxial zur Wickelwelle 4 an dem Stirnende der Wickelwelle 4 derart angeordnet, dass der Steuerfinger 7 mit seinem Führungszapfen 8 bei einer Drehbewegung der Wickelwelle 4 innerhalb der Spiralwindungen der Zählspirale 9 bewegt wird. Radial innenseitig ist die Zählspirale 9 mit einem zentrischen Durchtritt 10 versehen, in den das Achsprofil der Wickelwelle 4 in montiertem Zustand eintaucht. Die Spiralwindungen der Zählspirale 9 werden durch einen entsprechend spiralförmig gewundenen Führungssteg 11, 12 gebildet. Ein die radial innerste Spiralwindung bildender Abschnitt 11 des Führungssteges ist benachbart zu dem Durchtritt 10 angeordnet und weist eine Stirnkante auf, an der der die innere Spiralwindung bildende Abschnitt 11 endet. Der die innerste Spiralwindung bildende Abschnitt 11 geht fluchtend in die radial nach außen nächstliegende Spiralwindung 12 über, die sich wiederum in entsprechend weitere Spiralwindungen fortsetzt. Im Bereich einer relativ weit radial außen liegenden Spiralwindung ist ein Anschlag A vorgesehen, an den der Führungszapfen 8 des Steuerfingers anschlägt. Dadurch wird eine weitere Drehbewegung der Wickelwelle 4 verhindert. Hierdurch ist zwangsläufig auch die Aufwickelkraft der Wickelfederanordnung 5 kurzzeitig aufgehoben.

Radial außerhalb des Anschlages A weist die Zählspirale 9 eine weitere Steuerspur S auf, die endlos umlaufend gestaltet ist. Der Steuerspur S ist im Bereich des Anschlages A eine elastisch bewegliche Steuerzunge Z zugeordnet, die die Vorbeiführung des Führungszapfens 8 des Steuerfingers 7 in Ausziehrichtung des Trennnetzes 1 und damit in Abwickelrichtung der Wickelwelle 4 ermöglicht. In der entgegengesetzten Richtung hingegen dient die Steuerzunge Z als Sperre oder Weiche, die den Führungszapfen 8 wieder in die darunter liegende Spiralspur zurücklenkt.

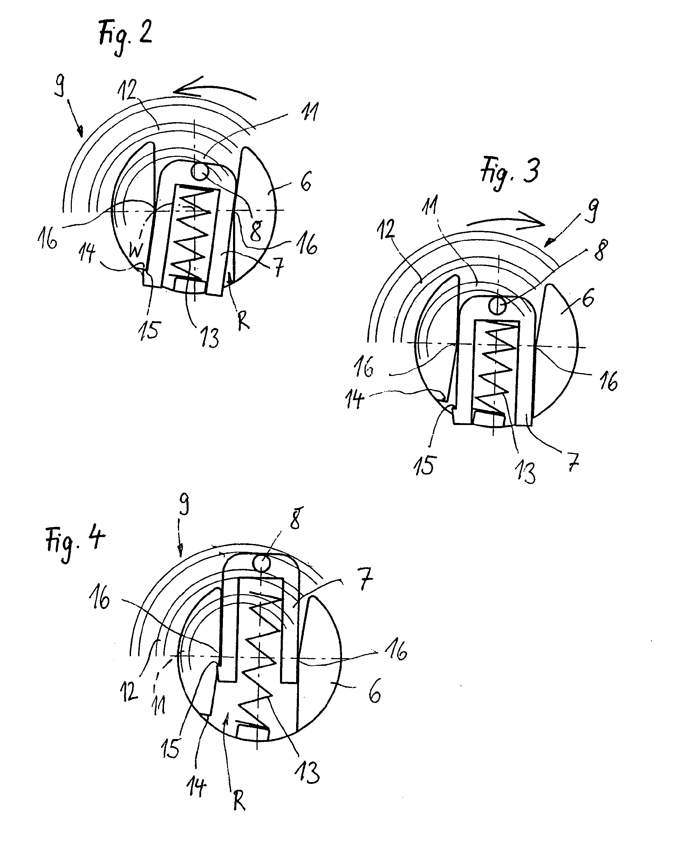

Wie anhand der Fig. 2 bis 4 erkennbar ist, ist der Steuerfinger 7 radial zur Wickelachse W in dem Stirnendbereich 6 der Wickelwelle 4 in Richtung des Doppelpfeiles (Fig. 1) translatorisch beweglich angeordnet. Der Steuerfinger 7 ist radial nach außen durch eine Druckfeder 13 federbelastet. Der Steuerfinger 7 ist als bügelartiges Bauteil ausgeführt, das mit zwei U-förmigen Schenkeln versehen ist, zwischen denen die Druckfeder 13 angeordnet ist. Innerhalb des Stirnendbereiches 6 der Wickelwelle 4 ist eine Radialführung R vorgesehen, die zu gegenüberliegenden Seiten des Stirnendbereiches 6 in einer gemeinsamen Radialebene offen ist. Die Radialführung R ist etwa auf Höhe der Wickelachse W mit einer Einschnürung 16 versehen, so dass sich die Radialführung R ausgehend von den zentrischen Einschnürungen 16 zu beiden Seiten radial nach außen trichterartig erweitert. Dabei sind die einander zu der Wickelachse W punktsymmetrisch alternierend gegenüberliegenden Seitenwandungen der Radialführung R jeweils parallel zueinander ausgeführt. Zudem entspricht der Abstand der jeweils parallel ausgerichteten Seitenwandungsabschnitte zueinander etwa der Breite des Steuerfingers 7. Auch die beiden Einschnürungen 16 weisen zueinander einen Abstand auf, der etwa der Breite des Steuerfingers 7 entspricht.

Der Steuerfinger 7 weist zudem im Bereich seines einen Schenkels eine als Hinterschnitt dienende Rastnase 15 auf. Korrespondierend zu dieser Rastnase 15 ist an der benachbarten Seitenwandung der Radialführung R eine Rastprofilierung 14 vorgesehen, die als der Wickelwelle zugeordneter Hinterschnitt dient. Wie anhand der Fig. 2 bis 4 erkennbar ist, ist der Steuerfinger 7 entweder in einer Position ausgerichtet, in der die Rastnase 15 die Rastprofilierung 14 der Radialführung R hintergreift, oder der Steuerfinger 7 ist derart zur gegenüberliegenden Seitenwandung hin verkippt, dass die Rastnase 15 von der Rastprofilierung 14 der Wickelwelle freikommt. In dieser Freigabeposition kann der Steuerfinger 7 durch die Druckkraft der Druckfeder 13 radial nach außen gedrückt werden.

Die Rastnase 15 und die korrespondierende Rastprofilierung 14 sind derart angeordnet, dass der Steuerfinger 7 in seiner radial inneren Position in Aufwickelrichtung der Wickelwelle zwangsläufig derart verkippt wird, dass die Rastnase 15 die Rastprofilierung 14 hintergreift. Die Kippbeweglichkeit wird durch die Einschnürungen 16 erzielt, die Drehpunkte nach Art einer Wippe definieren. Da der Führungszapfen 8 an dem inneren Spiralführungsabschnitt 11 der Zählspirale 9 entlanggleitet, bewirkt die entsprechende Reibkraft ein Drehmoment auf den Steuerfinger 7 entgegen dem Drehsinn der Wickelwelle. Dadurch kann der Steuerfinger 7, der gleichzeitig durch die Druckkraft der Druckfeder 13 radial nach außen gedrückt wird, die Rastprofilierung 14 mit seiner Rastnase 15 hintergreifen. Sobald sich die Drehrichtung der Wickelwelle umdreht und die Wickelwelle demzufolge in Abwickelrichtung gedreht wird, dreht sich auch die Richtung der Reibkraft, die auf den Führungszapfen 8 des Steuerfingers 7 im Bereich des Spiralführungsabschnittes 11 wirkt, um. Dadurch wird auf den Steuerfinger 7 ein entgegengesetztes Drehmoment aufgebracht, so dass der Steuerfinger 7 mit seiner Rastnase 15 von der Rastprofilierung 14 freikommt. Jetzt kann die Druckfeder 13 wieder wirksam sein und drückt den Steuerfinger 7 radial nach außen, so dass dieser sich in Abwickelrichtung der Wickelwelle und damit des Trennnetzes allmählich in den Spiralwindungen nach außen bewegt. Sobald der Steuerfinger 7 und damit der Führungszapfen 8 den Anschlag A der Zählspirale 9 erreicht haben, wird eine weitere Drehbewegung der Wickelwelle 4 blockiert. Die Rückholkraft der Wickelfederanordnung 5 dreht den Führungszapfen 8 und damit den Steuerfinger 7 anschließend geringfügig in der Zählspirale 9 zurück, bis der Führungszapfen 8 an dem Gegenanschlag G der Zählspirale 9 anschlägt. Jetzt ist die Rückholkraft der Wickelfederanordnung 5 zwangsläufig außer Kraft gesetzt. Durch die Druckkraft der Druckfeder 13 wird der Steuerfinger 7 entlang des Gegenanschlages G und der Steuerzunge Z radial nach außen gedrückt, bis der Führungszapfen 8 in der Steuerspur S angekommen ist. Ein weiterer Ausziehvorgang des Trennnetzes 1 und damit eine weitere Abwickelrichtung der Wickelwelle 4 führt nun dazu, dass der Führungszapfen 8 endlos - selbstverständlich auf die Anzahl der möglichen Umdrehungen beschränkt - in der Steuerspur S in Abwickelrichtung der Wickelwelle 4 umlaufen kann. Sobald die Halteköpfe 3 in den dachseitigen Halteaufnahmen eingehängt sind, dreht die Rückholkraft der Wickelfederanordnung 5 die Wickelwelle 4 in entgegengesetztem Drehsinn und damit in Aufwickelrichtung. Dadurch kommt der Führungszapfen 8 zwangsläufig an der Steuerzunge Z zum Anschlag, durch die er über den Gegenanschlag G in die radial nächstinnere Spiralwindung zurückgeführt wird. Beim anschließenden Aufwickeln, das durch die Rückholkraft der Wickelfeder 5 verursacht ist, wird der Führungszapfen 8 allmählich in den Spiralwindungen wieder nach innen bewegt, wodurch sich gleichzeitig der Steuerfinger 7 radial nach innen verschiebt. Sobald der Führungszapfen 8 und damit der Steuerfinger 7 den innen liegenden Spiralführungsabschnitt 11 erreicht haben, rastet die Rastnase 15 des Steuerzapfens 7 hinter der Rastprofilierung 14 ein, so dass die Druckfeder 13 den Steuerzapfen 7 nicht mehr radial nach außen gegen den entsprechenden Spiralführungsabschnitt 12 drücken kann. Erst dann, wenn die Drehrichtung wieder umgekehrt wird und das Trennnetz 1 aus seiner Ruheposition wieder abgewickelt wird, gerät der Steuerfinger 7 wieder in die Lage gemäß Fig. 3, so dass ein erneuter Ausziehvorgang mit einer entsprechenden Radialbewegung des Steuerfingers 7 in Richtung der Position gemäß Fig. 4 beginnt.

Die erfindungsgemäße Ausführungsform ist besonders vorteilhaft, falls der Führungszapfen 8 bereits den radial innen liegenden Spiralführungsabschnitt 11 erreicht hat und dennoch die Wickelwelle 4 noch mehrere Umdrehungen durchführen muss, bis das Trennnetz 1 in seine Ruheposition überführt ist. Denn dadurch wird vermieden, dass der Führungszapfen 8 und der Steuerfinger 7 bei jeder Umdrehung über die Stirnkante des Spiralführungsabschnittes 11 hinweggleiten und dabei der Führungszapfen 8 durch die Druckkraft der Druckfeder 13 an dem nächstliegenden, radial äußeren Spiralführungsabschnitt 12 anschlägt. Der Führungszapfen 8 ragt achsparallel zur Wickelachse (W) von dem Steuerfinger (7) ab und ist in der Spiralführung der Zählspirale (9) geführt, die in einer Radialebene zur Wickelachse (W) ausgerichtet ist.

Wie anhand der Darstellungen nach den Fig. 2 bis 4 erkennbar ist, ist ein oberer Seitenwandungsabschnitt der linken Seitenwandung oberhalb der linken Einschnürung 16 parallel zu einer Vertikalen ausgerichtet. In gleicher Weise ist ein unterer Seitenwandungsabschnitt der rechten Seitenwandung der Radialführung R, der unterhalb der rechten Einschnürung 16 angeordnet ist, parallel zur Vertikalen ausgerichtet. Die beiden verbleibenden Seitenwandungsabschnitte der gegenüberliegenden Seitenwandungen hingegen sind zwar parallel zueinander, jedoch winklig zu der Vertikalen ausgerichtet.

## Patentansprüche

1. Schutzvorrichtung für ein Kraftfahrzeug mit einem flexiblen Flächengebilde (1), das auf einer in einem Gehäuse drehbar gelagerten Wickelwelle (4) zwischen einer aufgewickelten Ruheposition und wenigstens einer zumindest teilweise ausgezogenen Schutzposition auf- und abwickelbar angeordnet ist, wobei die Wickelwelle (4) durch eine Wickelfederanordnung (5) in Aufwickelrichtung drehmomentbeaufschlagt ist, deren Aufwickelkraft mittels einer Steuereinrichtung (6 bis 9) reduzierbar ist, wobei die Steuereinrichtung (6 bis 9) eine Zählspirale (9) und einen in der Zählspirale (9) geführten, relativ zu einer Wickelachse (W) der Wickelwelle (4) radial beweglichen Steuerfinger (7, 8) umfasst, der wenigstens in Abwickelrichtung durch Federkraft gegen einen spiralförmig verlaufenden Führungssteg (11, 12) der Zählspirale (9) gedrückt ist,
**dadurch gekennzeichnet,dass**
dem Steuerfinger (7, 8) Sicherungsmittel (14, 15) zugeordnet sind, die den Steuerfinger (7, 8) in Aufwickelrichtung des Flächengebildes (1) in einer inneren Position zurückhalten.

2. Schutzvorrichtung nach Anspruch 1, **dadurch gekennzeichnet, dass** der Steuerfinger (7, 8) in einer der Wickelwelle zugeordneten Radialführung (R) radial beweglich geführt ist, und dass die Sicherungsmittel (14, 15) als formschlüssig wirksame, zueinander korrespondierende Hinterschnitte (14, 15) im Bereich der Radialführung (R) einerseits und im Bereich des Steuerfingers (7, 8) andererseits ausgeführt sind.

3. Schutzvorrichtung nach Anspruch 2, **dadurch gekennzeichnet, dass** die Radialführung (R) derart gestaltet ist, dass der Steuerfinger (7, 8) begrenzte Kippbewegungen um eine koaxial oder parallel zur Wickelachse (W) verlaufende Kippachse durchführen kann.

4. Schutzvorrichtung nach Anspruch 1, **dadurch gekennzeichnet, dass** der Steuerfinger (7, 8) - auf die Wickelachse (W) bezogen - radial nach außen federbelastet ist.

5. Schutzvorrichtung nach Anspruch 2, **dadurch gekennzeichnet, dass** die Hinterschnitte (14, 15) der Radialführung (R) und des Steuerfingers (7, 8) auf einer einzelnen, gemeinsamen Seite angeordnet sind, die derart gewählt ist, dass die Hinterschnitte in Aufwickelrichtung der Wickelwelle (W) einander hintergreifen und in Abwickelrichtung voneinander getrennt sind.

6. Schutzvorrichtung nach Anspruch 2, **dadurch gekennzeichnet, dass** die Radialführung auf Höhe der Wickelachse (W) eingeschnürt ist und von dort aus radial nach außen zu gegenüberliegenden Seiten trichterartig erweitert ist.
